# EUROPÄISCHE PATENTSCHRIFT

(11) **EP 2 370 709 B1**
(45) Veröffentlichungstag und Bekanntmachung des Hinweises auf die Patenterteilung: **23.11.2016**
(21) Anmeldenummer: 09805677.3
(22) Anmeldetag: 01.12.2009
(51) Int. Cl.: F16H 3/72

(54) **ANTRIEBSSTRANG MIT EINEM ERSTEN ELEKTROMOTOR UND EINEM PLANETENGETRIEBE**
DRIVE TRAIN HAVING A FIRST ELECTRIC MOTOR AND A PLANETARY GEAR MECHANISM
CHAÎNE CINÉMATIQUE COMPRENANT UN PREMIER MOTEUR ÉLECTRIQUE ET UN ENGRENAGE PLANÉTAIRE

(30) Priorität: 09.12.2008 DE 102008060871; 04.05.2009 DE 102009019485
(43) Veröffentlichungstag der Anmeldung: 05.10.2011
(73) Patentinhaber: Isatec GmbH, 52072 Aachen (DE); MTU FRIEDRICHSHAFEN GMBH, 88045 Friedrichshafen (DE)
(72) Erfinder: BEINER, Christian, 88682 Salem (DE); TEETZ, Christoph, 88048 Friedrichshafen (DE); WERNER, Ernst, August, 52074 Aachen (DE)
(74) Vertreter: Castell, Klaus
(86) Internationale Anmeldenummer: PCT/DE2009/001695
(87) Internationale Veröffentlichungsnummer: WO 2010/066233

(56) Entgegenhaltungen:
- JP-A- 2008 105 531
- US-A1- 2005 115 750
- US-A1- 2007 010 364
- US-A1- 2007 107 960
- US-A1- 2007 149 334
- US-A1- 2008 207 373

## Beschreibung

Die Erfindung betrifft einen Antriebsstrang, wobei der Antriebsstrang eine erste elektrische Maschine, welche in einem motorischen oder generatorischen Betriebszustand betreibbar ist, und ein Planetengetriebe mit einer Drehzahländerungsvorrichtung aufweist, wobei die Drehzahländerungsvorrichtung als nur ein Hohlrad und nur ein Planetenrad und nur ein Sonnenrad ausgestaltet ist, wobei das Planetengetriebe eine An- und eine Abtriebsseite aufweist.

Die Kopplung von elektrischen Maschinen mit Getrieben ist seit langem bekannt. Solche Antriebsstränge sind in den letzten Jahren im Automobilbereich sehr populär geworden. Der Vorteil solcher Antriebe liegt insbesondere darin, dass Bremsenergie, welche gewöhnlicherweise als Wärme abgeführt wird, in einen Energiespeicher gespeichert wird und bei Bedarf für den Antrieb bereit steht.

Auch sind aus dem Stand der Technik Getriebe bekannt, bei denen eine Drehzahltransformation mittels elektrischer Maschinen erfolgt. Die einfachste Ausführung eines solchen Getriebes ist die, in der die mechanische Energie in elektrische Energie umgewandelt wird und die elektrische Energie einen elektrischen Motor antreibt. Dabei wird die gesamte mechanische Energie in elektrische Energie und Verlustenergie umgewandelt. Dies führt zu einem ungünstigen Wirkungsgrad.

In weiteren Ausführungsformen des Standes der Technik werden in den mechanischen Getrieben elektromagnetische Planeten verwendet, welche durch Veränderung der Planetenräder so beschaltbar sind, so dass ein bestimmtes Übersetzungsverhältnis einstellbar ist. Solche Ausgestaltungen sind sowohl mechanisch als auch elektrisch sehr aufwändig in der Realisation.

In einigen Hybridkonzepten sind die elektrischen Maschinen in der gleichen Größenordnung wie die Verbrennungsmaschine ausgestaltet. Dies geht einher mit einem zusätzlichen Gewicht, welches von einem konventionellen Antrieb oder dem elektrischen Antrieb ebenfalls bewegt werden muss.

Dokument US 20070149334A1 offenbart die Prëambel des Anspruchs 1.

Aufgabe der Erfindung ist es, den Stand der Technik zu verbessern.

Gelöst wird die Aufgabe durch einen Antriebsstrang, wobei der Antriebsstrang eine erste elektrische Maschine, welche in einem motorischen oder generatorischen Betrieb betreibbar ist, und ein Planetengetriebe mit einer Drehzahländerungsvorrichtung aufweist, wobei die Drehzahländerungsvorrichtung als nur ein Hohlrad und nur ein Planetenrad und nur ein Sonnenrad ausgestaltet ist, wobei das Planetengetriebe eine An- und eine Abtriebsseite aufweist, wobei die erste elektrische Maschine im motorischen oder generatorischen Betriebszustand steuernd in die Drehzahländerungsvorrichtung eingreift, so dass sich ein vorgesehenes Übersetzungsverhältnis im Getriebe ausbildet.

Ein Antriebsstrang der hier beschriebenen Art kann insbesondere motorisch oder generatorisch eingesetzt werden. Im motorischen Einsatz dient der Antriebsstrang insbesondere der Fortbewegung. Im generatorischen Einsatz dient der Antriebsstrang insbesondere der Erzeugung elektrischer Energie.

Die hier zur Verwendung kommende erste elektrische Maschine kann in einem motorischen oder generatorischen Betrieb eingesetzt werden. Die Betriebsart wird insbesondere durch eine Beschaltung der ersten elektrischen Maschine festgelegt. So kann im motorischen Bereich der ersten elektrischen Maschine der an- oder abtreibenden Drehzahländerungsvorrichtung eine Drehzahl (in zwei Richtungen) aufgeprägt werden, wodurch sich ein Übersetzungsverhältnis quasi kontinuierlich einstellen lässt. Analog gilt dies für den generatorischen Bereich der ersten elektrischen Maschine. In diesen Ausgestaltungen erfolgt der Eingriff in die Drehzahlvorrichtung ohne eine Veränderung der Verortung des Planeten-, Hohl- oder Sonnenrades.

Im generatorischen Betrieb wird der ersten elektrischen Maschine eine Drehzahl über das Planetengetriebe aufgeprägt, wobei insbesondere elektrische Energie erzeugt wird.

Zudem kann die erste elektrische Maschine so betrieben werden, dass sie quasi "mitläuft". In diesem Betriebsmodus werden der Drehzahländerungsvorrichtung weder Drehzahlen aufgeprägt, noch prägt die Drehzahländerungsvorrichtung der elektrischen Maschine Drehzahlen auf. Dieser Betriebszustand kann insbesondere durch eine mechanische Arretierung und/oder Abkoppeln vom Antriebsstrang realisiert werden.

Im generatorischen Betrieb der ersten elektrischen Maschine kann die Drehzahländerungsvorrichtung der elektrischen Maschine Drehzahlen aufprägen, welche zu einer Stromerzeugung führen.

Das steuernde Eingreifen in die Drehzahländerungsvorrichtung erfolgt im Wesentlichen dadurch, dass die erste elektrische Maschine im motorischen oder generatorischen Betriebszustand der Drehzahländerungsvorrichtung eine Drehung aufprägt oder sich eine Drehung aufprägen lässt, wobei in diesem Modus die erste elektrische Maschine einen Widerstand, insbesondere steuernd, ausbildet. Dadurch kann mittels der ersten elektrischen Maschine das Übersetzungsverhältnis des Planetengetriebes beeinflusst werden.

Ganz besonders vorteilhaft ist dabei, wenn mit der ersten elektrischen Maschine das Planetengetriebe quasi kontinuierlich beschaltbar ist.

Um das Planetengetriebe mit möglichst geringem Drehmomentaufwand mit einem Übersetzungsverhältnis zu beaufschlagen, kann die erste elektrische Maschine im motorischen oder generatorischen Betrieb steuernd in das Sonnenrad eingreifen. Zudem kann so die erste elektrische Maschine zentral an das Planetengetriebe angeflanscht werden. Dadurch kann eine kompakte Bauform des Antriebsstranges realisiert werden.

In einer weiteren Ausgestaltung des Antriebsstranges kann die erste elektrische Maschine mit einem Energiespeicher verbunden sein. Somit kann vorteilhafterweise Energie aus dem Energiespeicher für die erste elektrische Maschine bereitgestellt werden und im generatorischen Betrieb durch die erste elektrische Maschine Energie dem Energiespeicher aufgeprägt werden. Als Energiespeicher können insbesondere Akkumulatoren, Kondensatoren und/oder Brennstoffzellen und/oder ein Stromnetz eingesetzt werden.

Um über den Antriebsstrang mechanische Leistung zu transferieren, kann antriebsseitig eine mechanische Energievorrichtung an das Planetengetriebe angeflanscht sein. Dabei ist das Anflanschen so ausgestaltet, dass mechanische Energie dem Antriebsstrang aufprägbar ist.

In einer Ausprägungsform der Erfindung kann die mechanische Energievorrichtung als Verbrennungsmaschine ausgestaltet sein. Dadurch kann vorteilhafterweise ein Hybridantrieb (Kombination aus mechanischer und elektrischer Maschine) realisiert werden. Zudem ist eine solche Verbrennungsmaschine zum Einsatz in sämtlichen Kraftfahrzeugen geeignet.

Um insbesondere mechanische Energie in elektrische Energie umzuwandeln, kann die mechanische Energievorrichtung als Rotor einer Gasturbine, Rotor einer Wasserturbine oder Rotor einer Windenergieanlage ausgestaltet sein.

In einer Ausprägungsform der Erfindung kann für den Fall, dass die mechanische Energievorrichtung eine Leistung an das Planetengetriebe überträgt, die erste elektrische Maschine den generatorischen Betriebszustand ausbilden, wobei die erste elektrische Maschine elektrische Energie erzeugt. Somit kann vorteilhafterweise mechanische Energie in elektrische Energie umgewandelt werden.

Um zu verschiedenen Zeitpunkten elektrische Energie bereit zu stellen, kann die von der ersten elektrischen Maschine erzeugte elektrische Energie dem Energiespeicher zugeführt werden.

In einer weiteren Ausprägungsform der Erfindung kann der Antriebsstrang eine Energiemanagementsteuerung aufweisen, welche den Energiefluss zwischen dem Energiespeicher und erster elektrischer Maschine steuert. Dadurch können abhängig vom Bedarf unterschiedliche Aufgaben durch den Antriebsstrang realisiert werden. So ist es zum einen möglich, bei leerem Energiespeicher diesen mittels der ersten elektrischen Maschine zu füllen oder mit der Energie aus dem Energiespeicher über die erste elektrische Maschine das Planetengetriebe zu steuern. Auch kann die Energiemanagementsteuerung zum Steuern und somit zum Ausbilden des Betriebszustandes eingesetzt werden.

In einer diesbezüglichen Ausprägungsform der Erfindung kann die Energiemanagementsteuerung einen Regler umfassen, welcher Sensordaten der mechanischen Energievorrichtung auswertet und über eine ermittelte Stellgröße die erste elektrische Maschine ansteuert. Als Sensordaten kommen hier insbesondere Drehzahl, Leistung und/oder Abgäswerte der Verbrennungsmaschine in Betracht. So kann beispielsweise mittels eines CO2-Sensors oder eines CO-Sensors die momentane Leistung der Verbrennungsmaschine bestimmt werden und durch Steuerung des Übersetzungsverhältnissen über die erste elektrische Maschine das Getriebe so angesteuert werden, dass die Verbrennungsmaschine in einem optimierten Bereich arbeitet. Auch abtriebsseitige Sensordaten wie beispielsweise die Stromnetzfrequenz können als Sensordaten zur Steuerung der ersten elektrischen Maschine dienen.

Um einen kompakten Antriebsstrang zu realisieren, kann die elektrische Maschine eine erste elektrische Nennleistung und die mechanische Energievorrichtung eine mechanische Nennleistung aufweisen, wobei in einer Ausgestaltungsform die erste elektrische Nennleistung 0 Prozent bis 50 Prozent der mechanischen Nennleistung beträgt.

In einer weiteren Ausprägungsform der Erfindung kann die erste elektrische Nennleistung 10 Prozent bis 35 Prozent der mechanischen Nennleistung betragen.

In einer weiteren nicht beanspruchten Ausprägungsform kann die erste elektrische Nennleistung 15 Prozent bis 25 Prozent und besonders bevorzugt ca. 20 Prozent der mechanischen Nennleistung betragen. Mit einem solchen Anteil kann insbesondere eine optimale Steuerung des Planetengetriebes realisiert werden.

Um einen effektiveren Hybridantrieb zu realisieren, kann der Antriebsstrang eine zweite elektrische Maschine aufweisen, welche in einem motorischen oder generatorischen Betriebszustand betreibbar und abtriebsseitig verortet ist. In dieser Ausführungsform ist ein Hybridantrieb realisiert, bei dem mittels der ersten elektrischen Maschine das Planetengetriebe stufenlos geregelt werden kann und die zweite elektrische Maschine zum Antrieb und zur Energiegewinnung beitragen kann.

Um optimale Bauformen für den Antriebsstrang zu realisieren, kann die zweite elektrische Maschine eine zweite elektrische Nennleistung aufweisen, welche eine zweite elektrische Nennleistung von 0 Prozent bis 150 Prozent aufweist. Weiterhin kann in einer nicht beanspruchten Ausführungsform die zweite elektrische Nennleistung 10 Prozent bis 35 Prozent oder 15 Prozent bis 25 Prozent und besonders bevorzugt ca. 20 Prozent betragen. In Kombination mit der ersten elektrischen Maschine kann so ein optimaler Antriebsstrang, bei dem insbesondere so ein Leistungs- / Gewicht- zu Raumverhältnis einstellbar ist, realisiert werden.

Um dem Energiespeicher Energie aufzuprägen beziehungsweise Energie aus dem Energiespeicher zu beziehen, kann die zweite elektrische Maschine mit dem Energiespeicher und auch vorzugsweise mit der Energiemanagementsteuerung verbunden sein.

In einer weiteren Ausprägung der Erfindung kann die Energiemanagementsteuerung den elektrischen Fluss zwischen dem Energiespeicher und der zweiten elektrischen Maschine steuern. Somit kann ein vom Betriebszustand abhängiges Verhalten der zweiten elektrischen Maschine steuernd realisiert werden. Dadurch kann insbesondere das Hybridverhalten gesteuert werden.

Ein solcher betriebsabhängiger Zustand kann insbesondere den Fall umfassen, dass ein Boot ein anderes Boot (z. B. Segelboot) abschleppt. Dabei kann das Verhalten eines Sensorwertes (z. B. Drehzahl) bei einem erstmaligen Beschleunigen protokolliert werden. Bei nachfolgenden Beschleunigungen kann entsprechend in das Getriebe eingegriffen werden. Ändert sich der Zustand wieder (das abgeschleppte Boot wird entkoppelt), wird die Änderung bei der Drehzahl beim dann wieder erstmaligen Beschleunigen protokolliert und bei weiteren Beschleunigungen steuernd in das Getriebe eingegriffen.

Damit die erste elektrische Maschine die zweite elektrische Maschine mit Energie versorgen kann, kann die zweite elektrische Maschine mit der ersten elektrischen Maschine elektrisch leitend verbunden ausgestaltet sein.

In einer diesbezüglichen nicht beanspruchten, Ausprägungsform kann die Energiemanagementsteuerung den elektrischen Fluss zwischen erster und zweiter elektrischer Maschine steuern. Damit die zweite elektrische Maschine dem Antriebsstrang Energie mit geringem Energieverlust aufprägen kann, kann die zweite elektrische Maschine abtriebsseitig verortet sein.

Um insbesondere ein Starten des Verbrennungsmotors zu ermöglichen, kann der Antriebsstrang abtriebsseitig eine erste Bremse aufweisen. In dieser Ausprägungsform kann insbesondere die erste elektrische Maschine über das Planetengetriebe das Starten der Verbrennungsmaschine unterstützen. Dies kann insbesondere dadurch erfolgen, dass die erste elektrische Maschine dem Verbrennungsmotor eine Drehzahl aufprägt, welcher dadurch einfacher gestartet werden kann.

Um einen rein elektrischen Antrieb zu realisieren, kann der Antriebsstrang antriebsseitig eine zweite Bremse aufweisen. Somit kann die Antriebsseite von der Abtriebsseite entkoppelt werden.

Um auch beim Ausfall der ersten oder der zweiten elektrischen Maschine Leistung von der Antriebsseite auf die Abtriebsseite zu transferieren, kann der Antriebsstrang eine Kupplung zwischen Antriebs- und Abtriebsseite aufweisen, welche in einem eingekuppelten Zustand Leistung von der mechanischen Energievorrichtung an die Abtriebsseite direkt überträgt. Somit kann vorteilhafterweise ein redundantes System aufgebaut werden.

In einer weiteren Ausprägungsform der Erfindung kann die mechanische Energievorrichtung im ungekuppelten Zustand Leistung über das Hohlrad des Planetengetriebes übertragen. Dadurch kann vorteilhafterweise ein hohes Drehmoment über das Planetengetriebe übertragen werden.

Um ein redundantes System zum Energiespeicher bereitzustellen, kann der Antriebsstrang ein Hilfsaggregat aufweisen, welches die erste und/oder die zweite elektrische Maschine mit elektrischer Energie versorgt. Dies kann insbesondere in einem Schiff das bereits vorhandene Hilfsaggregat zur Bereitstellung der elektrischen Energie im Schiff sein.

In einer weiteren Ausgestaltung der Erfindung kann die Energiemanagementsteuerung einen Regler umfassen, welcher Sensordaten der mechanischen Energievorrichtung auswertet und über eine ermittelte Stellgröße die zweite elektrische Maschine, die Kupplung und/oder die Bremse ansteuert. Hierdurch kann vorteilhafter Weise ein optimaler Eingriff in die Aktuatoren realisiert werden.

Weiterhin wird die Aufgabe gelöst durch ein Schienenfahrzeug, insbesondere einen Zug oder eine Straßenbahn, wobei das Schienenfahrzeug einen Antriebsstrang, wie zuvor beschrieben, aufweist. Dadurch kann vorteilhafter Weise der Antriebsstrang in einem Schienenfahrzeug verwendet werden.

In einem weiteren jedoch nicht beanspruchten Aspekt der Erfindung wird die Aufgabe gelöst durch ein Kraftfahrzeug, insbesondere LKW, PKW, Bus, Panzer oder Baufahrzeug, wobei das Kraftfahrzeug einen Antriebsstrang wie zuvor beschrieben aufweist. Dadurch kann vorteilhafterweise der Antriebsstrang in einem Kraftfahrzeug verwendet werden.

In einem weiteren nicht beanspruchten Aspekt der Erfindung kann die Aufgabe gelöst werden durch ein Wasserfahrzeug, insbesondere Schiff, Yacht, Boot oder Jet-Ski, wobei das Wasserfahrzeug einen Antriebsstrang wie zuvor beschrieben aufweist. Dadurch können umweltfreundliche Wasserfahrzeuge vorteilhafterweise bereitgestellt werden. Die Umweltfreundlichkeit des Antriebsstrangs (auch für die zuvor beschriebenen Ausführungsformen) kann sich insbesondere dadurch ergeben, dass der Schadstoffausstoß der Verbrennungsmaschine zu einer Steuerung des Planetengetriebes führt, wodurch die Verbrennungsmaschine umweltoptimal betreibbar ist.

In einem weiteren nicht beanspruchten Aspekt der Erfindung kann die Aufgabe gelöst werden durch ein Luftfahrzeug, insbesondere Propellerflugzeug, wobei das Luftfahrzeug einen Antriebsstrang wie oben beschrieben aufweist. Dadurch kann vorteilhafterweise ein umweltfreundliches Luft-fahrzeug bereit gestellt werden.

In einem weiterführenden, jedoch nicht beanspruchten Aspekt der Erfindung kann die Aufgabe gelöst werden durch eine Windenergieanlage, welche einen Antriebsstrang wie zuvor beschrieben aufweist. Dadurch kann vorteilhafterweise eine stufenlos geregelte Windenergieanlage bereitgestellt werden.

Um dem Stromnetz einen Strom aufzuprägen, welcher die Netzfrequenz aufweist (Netzsynchroner Einsatz), kann die Windenergieanlage antriebs- oder abtriebsseitig eine im wesentlichen konstante Drehzahl mittels der ersten elektrischen Maschine erzeugen.

In einem weiteren, nicht beanspruchten Aspekt der Erfindung kann die Aufgabe gelöst werden durch einen Windenergieanlagenpark, welcher wenigstens eine Windenergieanlage umfasst, wie sie zuvor beschrieben wurde. Ein solcher Windenergieanlagenpark wird auch häufig als Windpark bezeichnet, wobei er sich im wesentlichen dadurch charakterisiert, dass an einem Standort mehrere Windenergieanlagen gleichzeitig betrieben werden und wenigstens eine Windenergieanlage des Windenergieanlagenparks einem Windenergieanlagenparkeffekt unterliegt. Solche Effekte sind insbesondere die Reduktion der Windenergie für in Windrichtung hintereinander stehende Windenergieanlagen.

In einem weiteren, nicht beanspruchten Aspekt der Erfindung kann die Aufgabe gelöst werden durch eine Gasturbine, welche einen Antriebsstrang aufweist, wie er zuvor beschrieben ist.

In einem weiteren, nicht beanspruchten Aspekt der Erfindung wird die Aufgabe gelöst durch eine Gasturbinenanordnung, welche wenigstens eine Gasturbine wie zuvor beschrieben aufweist.

In einem weiterführenden, jedoch nicht beanspruchten Aspekt der Erfindung kann die Aufgabe gelöst werden durch eine Wasserturbine, welche einen Antriebsstrang aufweist, wie er zuvor beschrieben wurde.

In einem diesbezüglichen weiteren, nicht beanspruchten Aspekt der Erfindung kann die Aufgabe gelöst werden durch eine Wasserturbinenanordnung, welche wenigstens eine Wasserturbine aufweist, wie sie zuvor beschrieben wurde.

In einem weiteren, nicht beanspruchten Aspekt der Erfindung kann die Aufgabe gelöst werden durch ein Verfahren zum Anfahren eines der zuvor beschriebenen Fahrzeuge, insbesondere eines Schienenfahrzeuges, Kraftfahrzeuges, Wasserfahrzeuges oder Luftfahrzeuges, wobei die Anfahrt im Wesentlichen elektrisch erfolgt. Dadurch kann vorteilhafterweise ein leises und schadstoffarmes Anfahren realisiert werden, da insbesondere die Verbrennungsmaschine während des Anfahrens nicht betrieben werden muss.

Um eine optimale Übertragung der Leistung zu gewährleisten, kann bei dem Verfahren die zweite elektrische Maschine im motorischen Betriebszustand arbeiten.

In einer weiteren, nicht beanspruchten Ausprägungsform des Verfahrens kann sich die erste elektrische Maschine dabei im Wesentlichen in einem Leerlaufzustand befinden. Dadurch kann vorteilhafterweise die erste elektrische Maschine ressourcenschonend betrieben werden.

In einem weiteren, nicht beanspruchten Aspekt der Erfindung kann die Aufgabe gelöst werden durch ein Verfahren zum im Wesentlichen kontinuierlichen Fahren eines der zuvor beschriebenen Fahrzeuge, insbesondere Schienenfahrzeuges, Wasserfahrzeuges, Kraftfahrzeuges oder Luftfahrzeuges, wobei die abtriebsseitig benötigte Leistung im Wesentlichen durch die mechanische Energievorrichtung bereitgestellt wird. Dies kann sich vorteilhaft erweisen, da somit die mechanische Energievorrichtung in einem optimalen Zustand für einen langen Zeitraum betrieben werden kann.

In einer diesbezüglichen, jedoch nicht beanspruchten Ausprägungsform des Verfahrens kann ein erster Teil der abtriebsseitig benötigten Leistung mechanisch über das Planetengetriebe bereitgestellt werden und ein zweiter Teil der abtriebsseitig benötigten Leistung über die erste elektrische Maschine, welche im generatorischen Betriebszustand arbeitet, und durch die - durch die erste gespeiste - zweite elektrische Maschine bereitgestellt werden.

Durch den Anteil, welcher von der ersten elektrischen Maschine der zweiten elektrischen Maschine bereitgestellt wird, kann wiederum die Verbrennungsmaschine im optimalen Bereich betrieben werden, wobei dann die erste elektrische Maschine Strom für die zweite elektrische Maschine erzeugt. Dies kann sich als sehr umweltfreundlich erweisen. Die entsprechende Steuerung kann durch die Energiemanagementsteuerung realisiert werden.

In einem weiteren, nicht beanspruchten Aspekt der Erfindung kann die Aufgabe gelöst werden durch ein Verfahren zum Laden des Energiespeichers eines Antriebsstranges wie zuvor beschrieben, wobei ein Teil der antriebsseitig erzeugten Leistung über die erste und/oder zweite elektrische Maschine dem Energiespeicher aufgeprägt wird. Somit kann vorteilhafterweise abhängig vom Lastzustand, welcher abtriebsseitig gefordert ist, der Energiespeicher geladen werden. So kann in einer Bergabfahrt oder in stehendem Zustand die Energie, welche von einem Verbrennungsmotor bereitgestellt wird, gänzlich in elektrische Energie umgewandelt werden, welche dem Energiespeicher zugeführt wird.

In einem weiteren, nicht beanspruchten Aspekt der Erfindung kann die Aufgabe gelöst werden durch ein Verfahren zum Beschleunigen eines Fahrzeuges, insbesondere eines Schienenfahrzeuges, Kraftfahrzeuges, Wasserfahrzeuges oder Luftfahrzeuges, wie zuvor beschrieben, wobei die zweite elektrische Maschine vom Energiespeicher gespeist und insbesondere durch EM 1 versorgt wird. Dadurch kann vorteilhafterweise kurzfristig dem System mehr Leistung aufgeprägt werden als durch die Verbrennungsmaschine bereitgestellt wird.

In einem weiteren, nicht beanspruchten Aspekt der Erfindung kann die Aufgabe gelöst werden mit einem Verfahren zum Verzögern eines Fahrzeuges, insbesondere eines Schienenfahrzeuges, Kraftfahrzeuges, Wasserfahrzeuges oder Luftfahrzeuges, wie es zuvor beschrieben wurde, wobei bei einer Verzögerung über die zweite und/oder erste elektrische Maschine Energie dem Energiespeicher aufgeprägt wird. Dadurch kann vorteilhafterweise der Energiespeicher durch Rekuperation der Bremsenergie geladen werden. Dies führt dazu, dass Bremsenergie teilweise in elektrische Energie umgewandelt wird und diese dem Energiespeicher aufgeprägt wird.

In einem weiteren, nicht beanspruchten Aspekt der Erfindung wird die Aufgabe gelöst durch ein Verfahren zum Betreiben eines Wasserfahrzeuges, wobei sich das Betreiben in Fahren, teilweises Gleiten und Gleiten untergliedert, wobei im Fahren zusätzlich zu einer Verbrennungsmaschine eine elektrische Maschine im motorischen Betriebszustand zu einer Beschleunigung des Wasserfahrzeuges beiträgt. Die Definition von Gleiten, teilweises Gleiten und Fahren kann dem Buch "Motorkreuzer und schnelle Sportboote (Ausgabe von 1970)" von Juan Baader (insbesondere den Abbildungen 9 und 45) entnommen werden. Der diesbezügliche Inhalt ist Bestandteil der vorliegenden Schrift.

Somit kann bei einem Hybridantrieb zusätzliche Energie dafür aufgebracht werden, das energetisch ungünstige Fahren möglichst schnell zu überbrücken.

In einer diesbezüglichen, jedocht nicht beanspruchten Ausprägungsform der Erfindung handelt es sich bei dem Wasserfahrzeug um ein Wasserfahrzeug, wie es zuvor beschrieben wurde. Dabei kann insbesondere die erste und/oder die zweite elektrische Maschine zum Beschleunigen beitragen.

In einer nicht beanspruchten Ausprägungsform dieses Verfahrens kann die zweite elektrische Maschine bis zum Maximum eines Leistungsbeiwertes Cp (siehe "Motorkreuzer und schnelle Sportboote (Ausgabe von 1970)" von J. BAADER Abbildung 45) zu einer Beschleunigung des Wasser-fahrzeuges beitragen. Insbesondere ist kurz nach dem Maximum (zu höheren Geschwindigkeitsgraden R) des Leistungsbeiwerts Cp ein teilweises Gleiten des Wasserfahrzeuges realisiert. Daraus folgt, dass die eigentliche Leistung, welche zum Fortbewegen des Wasserfahrzeuges bereitgestellt werden muss, herabgesetzt werden kann. In diesem Verfahren ist insbesondere die elektrische Maschine als bereits beschriebene zweite elektrische Maschine ausgestaltet.

In einem weiteren, nicht beanspruchten Aspekt der Erfindung wird die Aufgabe gelöst durch ein Verfahren zum Regeln eines Fahrzeuges, wobei ein zu erwartendes Streckenprofil hinterlegt ist und das Fahrzeug einen Verbrennungsmotor und eine elektrische Maschine umfasst, wobei eine Funktion (Funktionsverlauf des Streckenprofils) der elektrischen Maschine an das zu erwartende Streckenprofil ausgebildet wird. Die aktuelle Position des Fahrzeuges kann insbesondere einer Satellitennavigation oder dem bekannten Fahrzyklus entnommen werden.

Somit kann ein Antriebsstrang auf zu erwartende Leistungen vorbereitend reagieren. Bei dem hinterlegten Streckenprofil werden insbesondere Parameter wie Steigung beziehungsweise Gefälle oder die Länge einer quasi horizontalen Strecke hinterlegt.

In einer diesbezüglichen, nicht beanspruchten Ausgestaltung des Verfahrens kann das Fahrzeug als ein Fahrzeug wie es zuvor beschrieben wurde, und die elektrische Maschine als die zweite elektrische Maschine ausgestaltet sein. Dadurch kann vorteilhafterweise der hier beschriebene Hybridantrieb zum Einsatz kommen.

In einem weiteren, nicht beanspruchten Aspekt der Erfindung wird die Aufgabe gelöst durch ein Verfahren zum Ein- oder Ausfahren eines Wasserfahrzeuges in oder aus einem Hafen, wobei das Wasserfahrzeug einen Verbrennungsmotor und eine elektrische Maschine mit Energiespeicher aufweist, wobei das Ein- oder Ausfahren im Wesentlichen mittels der elektrischen Maschine erfolgt. Dadurch kann vorteilhafterweise die Lärmbelästigung im Hafen reduziert werden. Zudem können die Schadstoffe, welche dem Hafenwasser zugeführt werden, reduziert werden.

In einer diesbezüglichen, nicht beanspruchten Ausgestaltungsform des Verfahrens kann das Wasserfahrzeug als ein Wasserfahrzeug, wie es zuvor beschrieben wurde, ausgestaltet sein.

In einem weiteren, nicht beanspruchten Aspekt der Erfindung kann die Aufgabe gelöst werden durch eine Vorrichtung zur Ausbildung eines Antriebsstranges, wobei die Vorrichtung eine Verbrennungsmaschine, eine Abtriebswelle, einé erste elektrische Maschine, eine zweite elektrische Maschine und ein an die Verbrennungsmaschine gekoppeltes Getriebe aufweist, wobei das Getriebe ein Hohlrad, ein Sonnenrad und einen Planetenträger aufweist, wobei die erste elektrische Maschine mit dem Sonnenrad steuernd gekoppelt ist und die zweite elektrische Maschine mit der Abtriebswelle gekoppelt ist und die Verbrennungsmaschine über das Hohlrad der Abtriebswelle ein Drehmoment aufprägt. Durch diese konkrete Ausgestaltung kann über die erste elektrische Maschine das Getriebeübersetzungsverhältnis vorteilhafte gesteuert werden.

In einem weiteren, nicht beanspruchten Aspekt der Erfindung wird die Aufgabe gelöst durch einen Elektroantriebsstrang, wobei der Elektroantriebsstrang einen Antriebsstrang wie er zuvor beschrieben wurde aufweist, wobei die mechanische Energievorrichtung durch eine elektrische Energievorrichtung ersetzt ist. Dadurch kann vorteilhafter Weise ein elektrisch steuerbares Getriebe für Elektroantriebsstränge bereit gestellt werden.

In einer diesbezüglichen, nicht beanspruchten Ausgestaltung der Erfindung kann ein Elektromotor (EM3) die elektrische Energievorrichtung bilden.

Im Weiteren wird die Erfindung anhand von Ausführungsbeispielen beschrieben. Dabei zeigt
Figur 1 eine schematische Ansicht eines Antriebsstrangs mit Verbrennungsmotor und Energiespeicher und
Figur 2 eine schematische Ansicht eines Antriebsstrangs, bei dem der Hauptantrieb eine elektrische Maschine bildet.

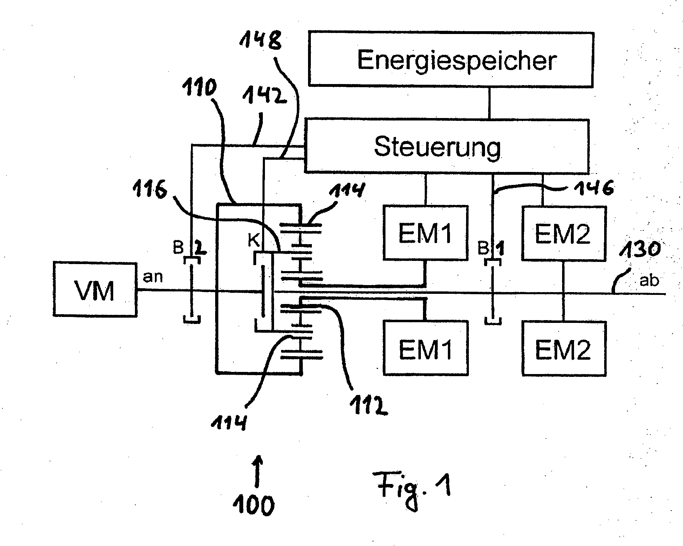

Das Planetengetriebe 100 in Figur 1 weist ein Hohlrad 110, Planetenräder 114 und ein Sonnenrad 112 auf. An das Hohlrad 110 ist die Verbrennungsmaschine VM antriebsseitig angeflanscht. Die Antriebsseite ist mit "an" gekennzeichnet. An das Sonnenrad 112 ist die erste elektrische Maschine EM1 angeflanscht.

Das Sonnenrad 112 ist als Hohlwelle ausgestaltet. Durch diese Hohlwelle wird eine Welle 130 zur Abtriebsseite geführt. Die Abtriebsseite ist mit "ab" gekennzeichnet. Auf der Welle 130 ist die Bremse B1 angeordnet. Diese Bremse kann die Welle 130 feststellen.

Antriebsseitig ist die Bremse B2 verortet, welche das Hohlrad 110 in Bezug auf die Verbrennungsmaschine arretieren kann.

An der Welle 130 ist die zweite elektrische Maschine EM2 angeflanscht. Dadurch kann die zweite elektrische Maschine EM2 der Welle 130 ein Drehmoment aufprägen. Ebenfalls kann die Welle 130 der elektrischen Maschine EM2 ein Drehmoment aufprägen, welches die zweite elektrische Maschine EM2 im generatorischen Betriebszustand in elektrische Energie umwandelt.

Über den Planetenträger 116 ist die Welle 130 mit dem Planetengetriebe 100 verbunden. Versetzt nun die Verbrennungsmaschine VM das Hohlrad 110 in Rotation, so wird diese Rotation über die Planeten 114 und den Planetenträger 116 an die Welle 130 übertragen.

Dadurch, dass die erste elektrische Maschine EM1 dem Sonnenrad 112 eine Rotation aufprägt, wird das Übersetzungsverhältnis im Planetengetriebe 100 beeinflusst. Der erste elektrische Motor EM1 ist über die Energiemanagementsteuerung ("Steuerung") sowohl mit dem Energiespeicher als auch mit der zweiten elektrischen Maschine EM2 verbunden. Die Energiemanagementsteuerung steuert dabei den elektrischen Fluss von EM1 zum Energiespeicher und zurück, den Energiefluss von EM2 in den Energiespeicher und zurück und den elektrischen Fluss von der ersten elektrischen Maschine EM1 zur zweiten elektrischen Maschine EM2 und umgekehrt.

Die Energiemanagementsteuerung ("Steuerung") nimmt dabei auch Sensorwerte des Verbrennungsmotors, des Energiespeichers und des Abtriebs oder im Fall einer Stromnetzanbindung Sensorwerte des Stromnetzes auf. Die Energiemanagementsteuerung ("Steuerung") kommunizert über Steuerleitungen (142, 146, 148) mit Kupplungen K und Bremsen B1, B2, so dass die Leistung an die gegebenen Bedingungen optimal angepasst werden kann.

In dieser Ausgestaltungsform wird über die erste elektrische Maschine EM1 das Übersetzungsverhältnis des Planetengetriebes 100 beeinflusst. Dadurch wird zusätzlich auch der Arbeitspunkt des Verbrennungsmotors bestimmt. Somit ist es möglich, die Verbrennungsmaschine nahe ihres optimalen Wirkungsgrades zu betreiben, damit der Kraftstoffverbrauch und der sich daraus ergebende CO2-Ausstoss minimiert werden.

Für den Fall, dass eine der elektrischen Maschinen EM1 oder EM2 ausgefallen ist, kann die Verbrennungsmaschine über die Kupplung K direkt die Abtriebswelle 130 antreiben. Dadurch ist ein redundantes System geschaffen.

Die in Figur 1 dargestellte Anordnung kann insbesondere für Fahrzeuge eingesetzt werden. Dabei können folgende Fahrzustände realisiert werden:

### Anfahrt (rein elektrischer Betrieb)

Bei ausreichendem Ladezustand des Energiespeichers erfolgt die Anfahrt rein elektrisch, das heißt, dass der Verbrennungsmotor VM abgeschaltet oder abgekoppelt ist. Die zweite elektrische Maschine EM2 arbeitet als Motor, wobei die benötigte Leistung dem Energiespeicher entzogen wird. Die erste elektrische Maschine EM1 befindet sich im Leerlauf oder wird als Zusatzantrieb genutzt.

### Normale Fahrt (Laden des Energiespeichers)

Die in diesem Fahrzeugzustand abverlangte Leistung wird ausschließlich vom Verbrennungsmotor VM geliefert. Dabei wird ein Großteil von der Verbrennungsmaschine VM erzeugter mechanischer Energie über das Planetengetriebe 100 an die Abtriebswelle 130 geleitet.

Ein weiterer Teil der mechanischen Energie wird durch die erste elektrische Maschine EM1 in elektrische Energie umgewandelt und direkt an die zweite elektrische Maschine EM2 weitergeleitet. Sollte es der Ladezustand des Energiespeichers erfordern, dass dieser geladen wird, wird ein Teil der von der ersten oder zweiten Elektromaschine erzeugten elektrischen Energie in den Speicher eingespeist. Dies wird durch die Energiemanagementsteuerung steuernd realisiert.

### Beschleunigung

Beschleunigungen werden von der zweiten elektrischen Maschine EM2 (auch als Elektromaschine bezeichnet) unterstützt, wobei sich die Leistung der zweiten elektrischen Maschine EM2 aus der von der ersten, in diesem Betriebszustand als Generator arbeitenden, elektrischen Maschine EM1 weitergeleiteten elektrischen Leistung und der dem Energiespeicher entzogenen Leistung ergibt. Diese von der ersten elektrischen Maschine EM1 bereitgestellte Leistung wird durch die zweite elektrische Maschine EM2 der Welle 130 aufgeprägt.

### Verzögerung

Bei einer Verzögerung kann durch Rekupertation der Bremsenergie der Energiespeicher geladen werden. Mindestens eine der beiden Elektromaschinen EM1 oder EM2 arbeitet in diesem Betriebszustand als Generator, wobei die erzeugte elektrische Energie dann dem Energiespeicher aufgeprägt wird.

Ist statt der Verbrennungsmaschine VM eine andere mechanische Energiequelle angebracht, zum Beispiel der Rotor einer Windkraftanlage oder ein Rotor einer Gas- oder Wasserturbine, kann die Vorrichtung (Antriebsstrang) zum Erzeugen von Energie verwendet werden.

Über die Steuerung des Übersetzungsverhältnisses durch die erste elektrische Maschine EM1 wird die erzeugte elektrische Energie netzsynchron bereitgestellt. In diesem Modus dient insbesondere die zweite elektrische Maschine EM2 als Generator. Dieser Generator weist im wesentlichen die Nennleistung auf, welche vom Rotor bereitgestellt werden kann.

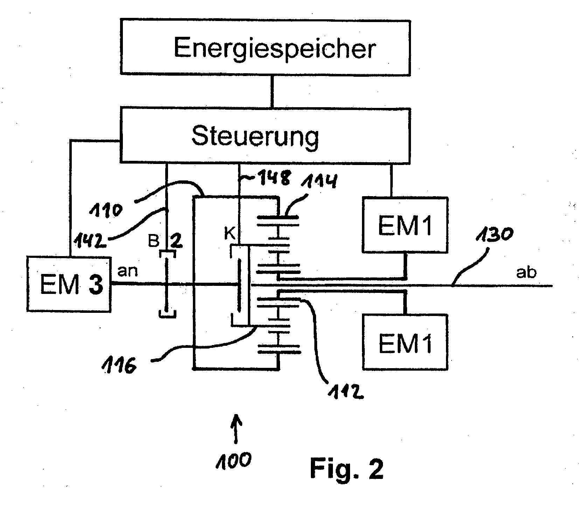

In Figur 2 ist ein Elektroantriebsstrang dargestellt. Dabei bildet der Elektromotor EM3 die elektrische Energievorrichtung. Die Funktion erfolgt analog zu dem Antriebsstrang in Figur 1, wobei hier die zweite elektrische Maschine EM2 nicht aufgeführt ist. Der hier dargestellte Elektroantriebsstrang bildet ein elektrisch steuerbares Planetengetriebe 100, welches von einem Elektromotor antreibbar ist. Im Wesentlichen wird so ein Elektroantrieb mit integrierter Drehzahlverstellung geschaffen.

Der Elektromotor kann auch als elektrische Maschine ausgestaltet sein. Dann ist ebenfalls eine Rekuperation der Energie möglich.

## Patentansprüche

1. Antriebsstrang, wobei der Antriebsstrang eine erste elektrische Maschine (EM1), welche in einem motorischen oder generatorischen Betriebszustand betreibbar ist, und ein Planetengetriebe (100) mit einer Drehzahländerungsvorrichtung aufweist, wobei das Planetengetriebe (100) eine Anund eine Abtriebsseite aufweist und die erste elektrische Maschine (EM1) im motorischen oder generatorischen Betriebszustand steuernd in die Drehzahländerungsvorrichtung eingreift, so dass sich ein Übersetzungsverhältnis im Planetengetriebe (100) ausbildet, wobei der Antriebsstrang nur ein Planetengetriebe mit einer Drehzahländerungsvorrichtung aufweist, die als nur ein Hohlrad (110) und nur ein Planetenrad (114) und nur ein Sonnenrad (112) ausgestaltet ist, ***dadurch gekennzeichnet, dass*** der Antriebsstrang abtriebsseitig eine erste Bremse (B1) oder antriebsseitig eine zweite Bremse (B2) aufweist.

2. Antriebsstrang nach Anspruch 1, ***dadurch gekennzeichnet, dass*** der Antriebsstrang antriebsseitig eine zweite Bremse (B2) aufweist.

3. Antriebsstrang nach Anspruch 1 oder 2, ***dadurch gekennzeichnet, dass*** der Antriebsstrang abtriebsseitig eine erste Bremse (B1) und antriebsseitig eine zweite Bremse (B2) aufweist.

4. Antriebsstrang nach einem der vorhergehenden Ansprüche, ***dadurch gekennzeichnet, dass*** die erste elektrische Maschine mit einem Energiespeicher verbunden ist.

5. Antriebsstrang nach einem der vorhergehenden Ansprüche, ***dadurch gekennzeichnet, dass*** antriebsseitig eine mechanische Energievorrichtung an das Planetengetriebe geflanscht ist und die Energievorrichtung insbesondere als Verbrennungsmaschine, als Rotor einer Gasturbine, als Rotor einer Wasserturbine und/oder als Rotor einer Windenergieanlage ausgestaltet ist ausgestaltet ist.

6. Antriebsstrang nach Anspruch 5, ***dadurch gekennzeichnet, dass*** für den Fall, dass die mechanische Energievorrichtung eine Leistung an das Planetengetriebe überträgt, die erste elektrische Maschine den generatorischen Betriebszustand ausbildet, wobei die erste elektrische Maschine elektrische Energie bereitstellt.

7. Antriebsstrang nach den Ansprüchen 5 oder 6 ***dadurch gekennzeichnet, dass*** die erste elektrische Maschine eine erste elektrische Nennleistung und die mechanische Energievorrichtung eine mechanische Nennleistung aufweist, wobei die erste elektrische Nennleistung 0 Prozent bis 50 Prozent der mechanischen Nennleistung beträgt.

8. Antriebsstrang nach einem der vorhergehenden Ansprüche, ***dadurch gekennzeichnet, dass*** der Antriebsstrang eine zweite elektrische Maschine (EM2) aufweist, welche in einem motorischen oder generatorischen Betriebszustand betreibbar ist.

9. Antriebsstrang nach Anspruch 8, ***dadurch gekennzeichnet, dass*** die zweite elektrische Maschine eine elektrische Nennleistung von 1 Prozent bis 150 Prozent der mechanischen Nennleistung aufweist.

10. Antriebsstrang nach Anspruch 9, ***dadurch gekennzeichnet, dass*** die zweite elektrische Maschine abtriebsseitig verortet ist.

11. Antriebsstrang nach einem der Ansprüche 5, 6 oder 7, ***dadurch gekennzeichnet, dass*** der Antriebsstrang eine Kupplung (K) zwischen Antriebs- und Abtriebsseite aufweist, welche in einem eingekuppelten Zustand Leistung von der mechanischen Energievorrichtung an die Abtriebsseite direkt überträgt.

12. Antriebsstrang nach Anspruch 11, ***dadurch gekennzeichnet*, *dass*** die mechanische Energievorrichtung im ausgekuppelten Zustand die Leistung über das Hohlrad des Planetengetriebes überträgt.

13. Antriebsstrang nach einem der vorhergehenden Ansprüche, ***dadurch gekennzeichnet, dass*** der Antriebsstrang ein Hilfsaggregat aufweist, welches die erste und/oder die zweite elektrische Maschine mit elektrischer Energie versorgt.

14. Antriebsstrang nach einem der Ansprüche 5,6,7,11 oder 12, ***dadurch gekennzeichnet*, *dass*** eine Energiemanagementsteuerung einen Regler umfasst, welcher Sensordaten der mechanischen Energievorrichtung auswertet und über eine ermittelte Stellgröße die zweite elektrische Maschine, die Kupplung und/oder die Bremse ansteuert.

## Claims

1. A drivetrain, wherein the drivetrain has a first electric machine (EM1), which can be operated in a motor or generative operating state, and a planetary gearbox (100) with a device for changing the rotational speed, wherein the planetary gearbox (100) has a drive side and an output side and the first electric machine (EM1) engages in the device for changing the rotational speed in a controlling manner in the motor or generative operating state, so that a gear ratio is formed in the planetary gearbox (100), wherein the drivetrain only has one planetary gearbox with a device for changing the rotational speed, which device is designed as only one internal gear (110) and only one planetary gear (114) and only one sun gear (112), ***characterised in that*** the drivetrain has a first brake (B1) on the output side or a second brake (B2) on the drive side.

2. The drivetrain according to Claim 1, ***characterised in that*** the drivetrain has a second brake (B2) on the drive side.

3. The drivetrain according to Claim 1 or 2, ***characterised in that*** the drivetrain has a first brake (B1) on the output side and a second brake (B2) on the drive side.

4. The drivetrain according to one of the preceding claims, ***characterised in that*** the first electric machine is connected to an energy storage device.

5. The drivetrain according to one of the preceding claims, ***characterised in that*** a mechanical power device is flanged onto the planetary gearbox and the power device is particularly designed as an internal combustion engine, as a rotor of a gas turbine, as a rotor of a water turbine and/or as a rotor of a wind power plant.

6. The drivetrain according to Claim 5, ***characterised in that*** for the case that the mechanical power device transmits power to the planetary gearbox, the first electric machine forms the generative operating state, wherein the first electric machine provides electrical energy.

7. The drivetrain according to Claims 5 or 6, ***characterised in that*** the first electric machine has a first rated electrical output and the mechanical power device has a rated mechanical output, wherein the first rated electrical output is 0 per cent to 50 per cent of the rated mechanical output.

8. The drivetrain according to one of the preceding claims, ***characterised in that*** the drivetrain has a second electric machine (EM2), which can be operated in a motor or generative operating state.

9. The drivetrain according to Claim 8, ***characterised in that*** the second electric machine has a rated electrical output of 1 per cent to 150 per cent of the rated mechanical power.

10. The drivetrain according to Claim 9, ***characterised in that*** the second electric machine is located on the output side.

11. The drivetrain according to one of Claims 5, 6 or 7, ***characterised in that*** the drivetrain has a clutch (K) between the drive and output sides, which, in an engaged state, transmits power from the mechanical power device to the output side directly.

12. The drivetrain according to Claim 11, ***characterised in that,*** in the disengaged state, the mechanical power device transmits the power via the internal gear of the planetary gearbox.

13. The drivetrain according to one of the preceding claims, ***characterised in that*** the drivetrain has an auxiliary power unit, which supplies the first and/or the second electric machine with electrical energy.

14. The drivetrain according to one of Claims 5, 6, 7, 11 or 12, ***characterised in that*** the energy management control comprises a controller, which evaluates sensor data of the mechanical power device and controls the second electric machine, the clutch and/or the brake by means of a determined control variable.

## Revendications

1. Chaîne cinématique, la chaîne cinématique comportant une première machine électrique (ME1) pouvant être mise en oeuvre dans un état de fonctionnement moteur ou générateur,et, un train épicycloïdal (100) avec un dispositif de modification de régime, le train épicycloïdal (100) comportant un côté d'entraînement et un côté de sortie et la première machine électrique (ME1) venant en prise à l'état de fonctionnement moteur ou générateur en commande dans le dispositif de modification de régime de manière à ce qu'un rapport de transmission se forme dans le train épicycloïdal (100), la chaîne cinématique ne comportant qu'un train épicycloïdal avec un dispositif de modification de régime qui n'est configuré que comme une roue à denture intérieure (110) et une roue planétaire (114) et une roue solaire (112), ***caractérisée en ce que*** la chaîne cinématique comporte côté sortie un premier frein (B1) ou côté entraînement un deuxième frein (B2).

2. Chaîne cinématique selon la revendication 1, ***caractérisée en ce que*** la chaîne cinématique comporte côté entraînement un deuxième frein (B2).

3. Chaîne cinématique selon la revendication 1 ou 2, ***caractérisée en ce que*** la chaîne cinématique comporte côté sortie un premier frein (B1) et côté entraînement un deuxième frein (B2).

4. Chaîne cinématique selon l'une quelconque des revendications précédentes, ***caractérisée en ce que*** la première machine électrique est reliée à un accumulateur d'énergie.

5. Chaîne cinématique selon l'une quelconque des revendications précédentes, ***caractérisée en ce que*** côté entraînement un dispositif d'énergie mécanique est bridé au train épicycloïdal et le dispositif d'énergie est configuré en particulier comme une machine à combustion interne, comme un rotor d'une turbine à gaz, comme un rotor d'une turbine hydraulique et/ou comme un rotor d'une éolienne.

6. Chaîne cinématique selon la revendication 5, ***caractérisée en ce que*** dans le cas où le dispositif d'énergie mécanique transmet une puissance au train épicycloïdal, la première machine électrique constitue l'état de fonctionnement générateur, la première machine électrique fournissant de l'énergie électrique.

7. Chaîne cinématique selon les revendications 5 ou 6, ***caractérisée en ce que*** la première machine électrique présente une première puissance nominale et le dispositif d'énergie mécanique une puissance nominale mécanique, la première puissance nominale électrique étant de 0 pourcent à 50 pourcent de la puissance nominale mécanique.

8. Chaîne cinématique selon l'une quelconque des revendications précédentes, ***caractérisée en ce que*** la chaîne cinématique comporte une deuxième machine électrique (ME2), laquelle pouvant être mise en oeuvre dans un état de fonctionnement moteur ou générateur.

9. Chaîne cinématique selon la revendication 8, ***caractérisée en ce que*** la deuxième machine électrique présente une puissance nominale électrique de 1 pourcent à 150 pourcent de la puissance nominale mécanique.

10. Chaîne cinématique selon la revendication 9, ***caractérisée en ce que*** la deuxième machine électrique est placée côté sortie.

11. Chaîne cinématique selon l'une quelconque des revendications 5, 6 ou 7, ***caractérisée en ce que*** la chaîne cinématique comporte un accouplement (K) entre le côté entraînement et le côté sortie, lequel dans un état accouplé transmet directement la puissance du dispositif d'énergie mécanique au côté sortie.

12. Chaîne cinématique selon la revendication 11, ***caractérisée en ce que*** le dispositif d'énergie mécanique à l'état désaccouplé transmet la puissance par le biais de la roue à denture intérieure du train épicycloïdal.

13. Chaîne cinématique selon l'une quelconque des revendications précédentes, ***caractérisée en ce que*** la chaîne cinématique comporte un groupe auxiliaire, lequel alimente en énergie électrique la première et/ou la deuxième machine électrique.

14. Chaîne cinématique selon l'une quelconque des revendications 5, 6, 7, 11 ou 12, ***caractérisée en ce qu*'**une commande de gestion d'énergie comprend un régulateur, laquelle exploite des données de détection du dispositif d'énergie mécanique et pilote, par le biais d'une grandeur de réglage déterminée, la deuxième machine électrique, l'accouplement et/ou le frein.
